# EUROPÄISCHE PATENTSCHRIFT

(11) **EP 3 129 217 B1**
(45) Veröffentlichungstag und Bekanntmachung des Hinweises auf die Patenterteilung: **06.06.2018**
(21) Anmeldenummer: 15716975.6
(22) Anmeldetag: 02.04.2015
(51) Int. Cl.: B31B 70/60, B05C 5/00, B05C 11/10, B31B 50/60

(54) **VORRICHTUNG UND VERFAHREN ZUM VERSCHLIESSEN VON SÄCKEN AUS GEWEBE**
APPARATUS FOR CLOSING BAGS MADE OF WOVEN FABRIC
DISPOSITIF DE FERMETURE DE SACS EN TISSU

(30) Priorität: 03.04.2014 AT 2492014
(43) Veröffentlichungstag der Anmeldung: 15.02.2017
(73) Patentinhaber: LOHIA CORP LIMITED, Kanpur, Uttar Pradesh 208022 (IN)
(72) Erfinder: WORFF, Herwig, 4810 Gmunden (AT)
(74) Vertreter: Keschmann, Marc
(86) Internationale Anmeldenummer: PCT/AT2015/000051
(87) Internationale Veröffentlichungsnummer: WO 2015/149091

(56) Entgegenhaltungen:
- WO-A1-2010/049335
- JP-A- H0 326 370
- US-A- 3 739 745

## Beschreibung

Die Erfindung betrifft eine Vorrichtung zum Verschließen von Säcken aus Gewebe, der schlauchförmige Sackkörper zuführbar sind, umfassend eine Klebstoffaufbringungsvorrichtung zum kontinuierlichen Aufbringen von Klebstoff in einem Klebebereich und eine Transportvorrichtung zum Transportieren der schlauchförmigen Sackkörper quer zu ihrer Längsachse durch den Klebebereich, sodass auf einen streifenförmigen Bereich der schlauchförmigen Sackkörper Klebstoff aufgebracht werden kann.

Weiters betrifft die Erfindung ein Verfahren zum Verschließen von Säcken aus Gewebe, bei dem die schlauchförmigen Sackkörper mithilfe einer Transportvorrichtung quer zu ihrer Längsachse transportiert werden, wobei die schlauchförmigen Sackkörper in Transportrichtung voneinander beabstandet sind und das Verschließen ein kontinuierliches Aufbringen eines Klebstoffes in einem Klebebereich umfasst, wobei die schlauchförmigen Sackkörper durch den Klebebereich geführt werden, sodass auf einen streifenförmigen Bereich der schlauchförmigen Sackkörper Klebstoff aufgebracht wird.

Der schlauchförmige Körper eines Sackes wird üblicherweise aus einem schlauchartigen Rundmaterial oder einem an den Längsrändern zu einem Schlauch verbundenen Flachmaterial gebildet. Anschließend wird der schlauchförmige Körper an zumindest einem Ende verschlossen, um einen Sack zu formen.

Das Verschließen der schlauchförmigen Körper erfolgt üblicherweise in einem Quertransportschritt, d.h. die einzelnen schlauchförmigen Körper werden im flachen Zustand quer zu ihrer Längsachse transportiert, wobei zwischen den einzelnen schlauchförmigen Sackkörpern ein sich in Transportrichtung erstreckender Abstand bzw. Zwischenraum besteht. Die schlauchförmigen Sackkörper werden beispielsweise durch Vernähen oder Verkleben verschlossen. Das Verkleben kann entweder durch kontinuierliches oder durch getaktetes Aufbringen von Klebstoff erfolgen. Bei getaktetem Aufbringen wird der Klebstoff lediglich auf die schlauchförmigen Sackkörper aufgebracht und nicht in den Zwischenräumen zwischen aufeinanderfolgenden schlauchförmigen Sackkörpern. Bei der kontinuierlichen Aufbringung hingegen wird die Klebstoffausbringung nicht unterbrochen. Wenn die einzelnen Sackkörper die Stelle der Klebstoffausbringung nacheinander und in Abstand voneinander durchlaufen, führt dies dazu, dass der Klebstoff auch in den Zwischenräumen zwischen aufeinanderfolgenden Sackkörpern aufgebracht wird.

Die kontinuierliche Ausbringung von Klebstoff weist gegenüber dem getakteten Ausbringen eine Reihe von Vorteilen auf. Beispielsweise gestaltet sich die Steuerung der Klebstoffausbringungsdüse wesentlich einfacher und daher sind sowohl die Konstruktionskosten als auch die Instandhaltungskosten geringer als bei einer getakteten Ausbringung. Ein Nachteil der kontinuierlichen Ausbringung ist das oben beschriebene Problem, dass der Klebstoff auch in die Zwischenräume zwischen aufeinanderfolgenden Sackkörpern ausgebracht wird, sodass Klebstoff verloren geht und die Gerätschaften verschmutzt. Siehe zum Beispiel WO2010/049335. Üblicherweise ist unterhalb einer Klebstoffeinbringungsvorrichtung eine Platte angeordnet und die schlauchförmigen Sackkörper werden zwischen der Klebstoffeinbringungsvorrichtung und der Platte geführt. Die Platte dient hierbei als Auflage für den zu verschließenden Randbereich der Sackkörper, wobei die Platte auch als Gegenelement für wenigstens eine Druckrolle dient, mit welcher der Randbereich nach dem Umschlagen desselben auf den Sackkörper gedrückt wird, um den umgeschlagenen Randbereich unter Vermittlung des Klebstoffes zu kleben. Bei der kontinuierlichen Klebstoffausbringung gelangt jedoch in den Zwischenräumen zwischen aufeinanderfolgenden Sackkörpern Klebstoff auf die Platte, der in regelmäßigen Abständen entfernt werden muss, was eine Unterbrechung des Betriebes erfordert und daher unerwünscht ist.

Das Gewebe der im Rahmen der Erfindung verarbeiteten Säcke besteht bevorzugt aus monoaxial verstreckten Polymer-, insbesondere Polyolefin- oder Polypropylenbändchen. Diese Bändchen werden durch Streckung von Polymer-, insbesondere Polyolefin- oder Polypropylenfolien üblicherweise auf das vier- bis zehnfache hergestellt, wodurch die Molekülketten in Bändchenlängsrichtung ausgerichtet werden und in diese Richtungen ca. die sechs- bis zehnfache Festigkeit gegenüber der ursprünglichen Folie aufweisen. Die Bändchenbreite beträgt üblicherweise ca. 1,5 bis 10 mm, die Dicke 20 bis 80 µm.

Es ist eine Aufgabe der gegenständlichen Erfindung, eine Vorrichtung der eingangs genannten Art bereitzustellen, mit welcher die mit der kontinuierlichen Ausbringung von Klebstoff verbundenen Probleme beseitigt werden können.

Zur Lösung dieser Aufgabe sieht die Erfindung bei einer Vorrichtung gemäß Anspruch 1 vor, dass eine von der Transportvorrichtung gesonderte Klebstoffabtransportvorrichtung unterhalb des Klebebereichs angeordnet ist, um den in dem Zwischenraum zwischen den einzelnen schlauchförmigen Sackkörpern von der Klebstoffaufbringungsvorrichtung aufgebrachten Klebstoff abzutransportieren. Die Klebstoffaufbringungsvorrichtung ist so geführt, dass der kontinuierlich aufgebrachte Klebstoff im Bereich der Zwischenräume zwischen aufeinanderfolgenden Sackkörpern auf die Klebstoffaufbringungsvorrichtung gelangt, wodurch der überflüssige Klebstoff von dem Klebebereich wegtransportiert und an einem anderen Ort von der Klebstoffaufbringungsvorrichtung entfernt und weiter verarbeitet werden kann. Die Klebstoffaufbringungsvorrichtung ist hierbei kein Teil der Sackkörpertransportvorrichtung, sondern stellt eine eigenständige Einheit dar, die bevorzugt gesondert zu- bzw. abgeschaltet werden kann.

Bevorzugt ist die Klebstoffabtransportvorrichtung von einem angetriebenen Band oder einer angetriebenen Rolle gebildet. Die Führungsrichtung des Bandes kann grundsätzlich beliebig gewählt werden, also bspw. parallel oder normal zu der Transportrichtung der schlauchförmigen Sackkörper. Bevorzugt ist, dass die Führungsrichtung des Bandes im wesentlichen parallel zur Transportrichtung der schlauchförmigen Körper gewählt ist.

Eine bevorzugte Weiterbildung sieht vor, dass die Klebstoffaufbringungsvorrichtung ein Extruder ist. Ein Extruder bietet die Möglichkeit, durch einfache Mittel eine Klebstoffaufbringungsvorrichtung bereitzustellen, die einen gleichmäßigen Klebstoffauftrag ermöglicht. Es ist auch möglich, diesen Extruder beheizbar auszubilden, um Heißschmelzklebstoffe für das Verschließen der schlauchförmigen Sackkörper verwenden zu können.

Bevorzugt ist die Klebstoffabtransportvorrichtung, insbesondere das Band oder die Rolle, unterhalb einer Klebstoffaustrittsstelle der Klebstoffaufbringungsvorrichtung angeordnet. Hierbei befinden sich die Klebstoffaustrittsstelle und ein Bereich des Bandes immer auf einer vertikalen Achse. Dies ermöglicht die vertikale Ausbringung des Klebstoffes aus der Klebstoffaustrittsstelle unter Ausnutzung der Schwerkraft.

Weiters ist bevorzugt, dass die Klebstoffabtransportvorrichtung, insbesondere das Band oder die Rolle, hitzebeständig ist. Dies erlaubt die sichere Aufbringung auch von heißen Klebstoffen ohne dass die Klebstoffabtransportvorrichtung durch die Hitze beschädigt wird.

Um das Kleben des Klebstoffes auf dem Band zu vermeiden, ist in einer bevorzugten Weiterbildung vorgesehen, dass die der Klebstoffausbringung zugewandte Seite der Klebstoffabtransportvorrichtung eine antiadhäsive Beschichtung aufweist. Dadurch wird das Ablösen des Klebstoffes von der Klebstoffabtransportvorrichtung, insbesondere vom Band bzw. der Rolle, und damit die Reinigung erleichtert. Besonders bevorzugt ist das Band beidseitig mit einer antiadhäsiven Beschichtung versehen, um bspw. auch anderen Stoffen bzw. unbeabsichtigt aufgebrachtem Klebstoff das Haften an der Unterseite des Bandes zu erschweren.

Um das Band sauber zu halten, ist bevorzugt eine an die Klebstoffabtransportvorrichtung anstellbare und mit dieser zusammenwirkende Reinigungsvorrichtung, bspw. eine Bürste, vorgesehen. Dadurch kann die Klebstoffabtransportvorrichtung, insbesondere das Band bzw. die Rolle, kostengünstig kontinuierlich gereinigt werden. Es kann auch vorgesehen sein, dass die Reinigungsvorrichtung intervallartig an die Klebstoffabtransportvorrichtung angestellt wird, um diese zu reinigen.

Der Antrieb der Klebstoffabtransportvorrichtung kann vom Antrieb für die Sackkörpertransportvorrichtung gesondert ausgebildet sein. In einer bevorzugten Ausbildung ist jedoch vorgesehen, dass die Klebstoffabtransportvorrichtung mithilfe des Antriebes der Sackkörpertransportvorrichtung angetrieben ist. Der Antrieb der Sackkörpertransportvorrichtung, bspw. ein Elektromotor, ist in diesem Fall mit der Klebstoffabtransportvorrichtung gekoppelt, wobei die Klebstoffabtransportvorrichtung an- und abkoppelbar ausgebildet sein kann.

Eine besonders einfache Ausführung sieht vor, dass das Band als umlaufendes Band ausgebildet ist. Dabei wird ein geschlossenes Band so angeordnet, dass es um Umlenkrollen geführt wird.

Bevorzugt ist das Band unterhalb einer Transportebene der schlauchförmigen Sackkörper und oberhalb einer stationären Platte angeordnet. Dadurch kann der überflüssige Klebstoff vollständig vom Band aufgenommen werden. Falls Klebstoff unbeabsichtigt an den Seiten des Bandes hinabläuft, so wird dieser Klebstoff von der Platte aufgefangen und der Klebstoff kommt nicht mit dem Boden oder anderen Bereichen in Berührung.

Weiters ist bevorzugt vorgesehen, dass eine Umschlageinrichtung zum Umschlagen eines Endabschnittes des Gewebes in Transportrichtung nach der Klebstoffaufbringungsvorrichtung angeordnet ist. Durch eine solche Umschlageinrichtung werden zwei Lagen des schlauchförmigen Körpers sowie der dazwischen befindliche Klebstoff aneinandergepresst, wodurch der schlauchförmige Körper verschlossen ist. Es kann sowohl eine einseitige Umschlageinrichtung, bei der nur ein Ende des schlauchförmigen Körpers verschlossen wird, als auch eine zweiseitige Umschlageinrichtung, bei der beide Enden des schlauchförmigen Körpers verschlossen werden, vorgesehen sein.

In einer bevorzugten Ausbildung ist vorgesehen, dass die Klebstoffaufbringungsvorrichtung stationär angeordnet ist. Dadurch ist der Klebebereich immer an der gleichen Stelle. Alternativ dazu kann vorgesehen sein, dass die Klebstoffaufbringungsvorrichtung beweglich angeordnet ist, um eine flexiblere Aufbringung des Klebstoffes zu ermöglichen.

Weiters kann es vorgesehen sein, dass die Klebstoffabtransportvorrichtung verstellbar angeordnet ist, insbesondere quer zur Transportrichtung der Sackkörper. Dies kann beispielsweise bei einer beweglichen Klebstoffaufbringungsvorrichtung erforderlich sein, bzw. allgemein, wenn örtlich verschiedene Klebebereiche definierbar sein sollen.

Die erfindungsgemäße Vorrichtung kann mehrere Klebstoffabtransportvorrichtung, insbesondere Bänder umfassen, beispielsweise um mehrere Klebebereiche abdecken zu können. Insbesondere können zwei Klebstoffabtransportvorrichtungen vorgesehen sein, die den beiden gegenüberliegenden Endbereichen der schlauchförmigen Sackkörper zugeordnet sind. Diese Ausführung ermöglicht das gleichzeitige Verschließen beider offenen Enden der schlauchförmigen Sackkörper.

Zur Lösung der der Erfindung zugrunde liegenden Aufgabe schlägt die Erfindung weiters ein Verfahren gemäss Anspruch 7 wobei der in dem Zwischenraum zwischen den einzelnen schlauchförmigen Sackkörpern von der Klebstoffaufbringungsvorrichtung aufgebrachte Klebstoff mittels einer unterhalb des Klebebereiches angeordneten, von der Transportvorrichtung gesonderten Klebstoffabtransportvorrichtung abtransportiert wird.

Hierbei ist bevorzugt vorgesehen, dass die schlauchförmigen Sackkörper an wenigstens einem offenen Ende durch Umschlagen eines Endabschnittes des Gewebes nach der Aufbringung des Klebstoffes geschlossen werden. Dadurch wird ein zumindest an einem Ende geschlossener Sack hergestellt. Es können entweder nur ein Ende oder beide Enden verschlossen werden.

Bevorzugt wird der Klebstoff von einem angetriebenen Band oder einer angetriebenen Rolle abtransportiert.

Eine bevorzugte Weiterbildung des Verfahrens sieht vor, dass die Klebstoffabtransportvorrichtung mithilfe einer Reinigungsvorrichtung, bspw. einer Bürste, gereinigt wird. Durch solch eine Reinigungsvorrichtung wird der sich an der Klebstoffabtransportvorrichtung befindende überflüssige Klebstoff abgetragen und die Klebstoffabtransportvorrichtung dadurch gereinigt.

Bevorzugt ist weiters, dass die Sackkörpertransportvorrichtung und die Klebstoffabtransportvorrichtung gemeinsam angetrieben werden. Hierbei wird eine einzige Antriebsvorrichtung benutzt, die sowohl die Sackkörpertransportvorrichtung als auch die Klebstoffabtransportvorrichtung, insbesondere das Band oder die Rolle antreibt.

Weiters ist es bevorzugt, dass die Klebstoffabtransportvorrichtung, insbesondere das Band oder die Rolle in eine Richtung parallel zur Transportrichtung der Transportvorrichtung angetrieben wird. Insbesondere wird das Band hierbei in die gleiche Richtung bewegt wie die schlauchförmigen Sackkörper.

Eine bevorzugte Weiterbildung sieht vor, dass sich die Klebstoffabtransportvorrichtung, insbesondere das Band oder die Rolle mit der gleichen Geschwindigkeit wie die schlauchförmigen Sackkörper bewegt. Dadurch wird der Klebstoff in Abständen, die den Zwischenräumen zwischen den schlauchförmigen Sackkörpern entsprechen, auf das Band aufgetragen. Dadurch wird verhindert, dass der in den Zwischenräumen aufgebrachte Klebstoff, beispielsweise wenn dieser sich noch nicht von den schlauchförmigen Sackkörpern getrennt hat, durch das Band unter einen schlauchförmigen Sackkörper gezogen wird und dort mit diesem ungewollt verklebt.

Weiters ist bevorzugt, dass die schlauchförmigen Sackkörper auf dem Band aufliegen. Dadurch kann das Band gleichzeitig als Unterstützung der schlauchförmigen Sackkörper während des Transports genutzt werden.

In einer weiteren bevorzugten Ausführung wird das Band zwischen den schlauchförmigen Sackkörpern und einer stationären Platte geführt. Dadurch wird verhindert, dass der in den Zwischenräumen aufgebrachte Klebstoff durchgehend auf die Platte gelangt.

Die Erfindung findet bevorzugt bei Säcken Anwendung, deren Gewebe aus monoaxial verstreckten Polymer-, insbesondere Polyolefin- oder Polypropylenbändchen besteht.

Das Gewebe der schlauchförmigen Sackkörper kann grundsätzlich beschichtet oder unbeschichtet sein, wobei es bevorzugt vorgesehen ist, dass die Außenseiten der schlauchförmigen Sackkörper beschichtet sind. Hierbei besteht die Beschichtung bevorzugt aus demselben Polymer wie die Polymerbändchen. Die Beschichtung kann aus einer dünnen Schicht Polypropylen oder einer Mischung aus Polypropylen und Polyethylen bestehen.

Als Klebstoff kann im Rahmen der Erfindung ein Extrudat eines Polymers, insbesondere Polyolefins, wie z.B. Polypropylen, Polyethylen oder Mischungen von Polypropylen und Polyethylen, zum Einsatz gelangen. Besonders vorteilhaft ist hierbei die Verwendung eines Extrudats desjenigen Polymers, aus dem das Sackgewebe und ggf. dessen Beschichtung besteht. Dies erlaubt die Herstellung des Sackes aus einem einzigen Material, was nicht nur das Recycling begünstigt, sondern auch sehr kostengünstig ist und ein stabiles Produkt ergibt.

Die Erfindung wird nachfolgend anhand eines in der Zeichnung dargestellten Ausführungsbeispiels näher erläutert. In dieser zeigen Fig. 1 eine schematische Draufsicht auf die erfindungsgemäße Vorrichtung, Fig.2 eine Schnittansicht entlang der Linie II-II, Fig. 3 eine Ansicht auf den Quertransportabschnitt gemäß dem Pfeil III.

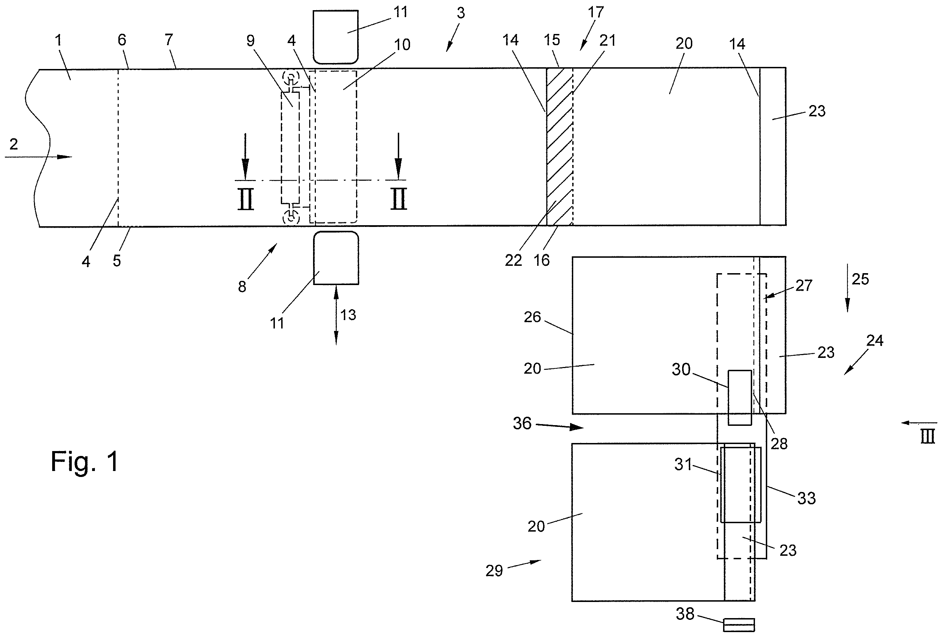

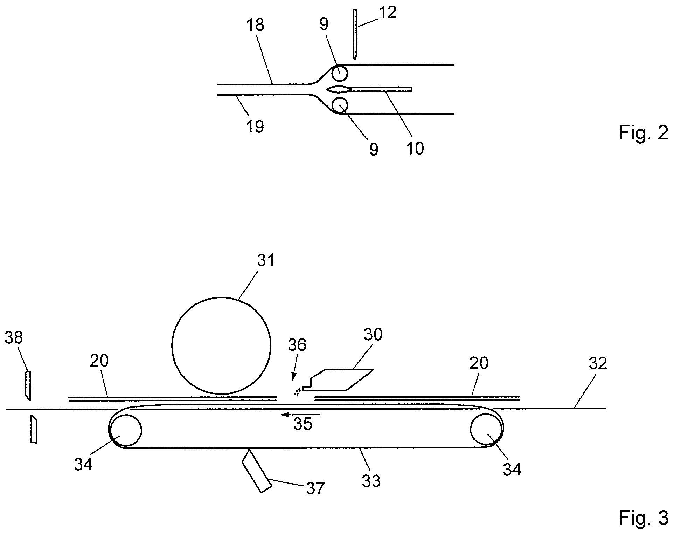

In Fig. 1 ist ersichtlich, dass ein Gewebeschlauch 1 der Vorrichtung in Richtung des Pfeils 2 zugeführt und innerhalb eines Längstransportabschnitts 3 der Vorrichtung in Richtung des Pfeils 2 transportiert wird. Zuerst wird der Gewebeschlauch 1 entlang der Schneidlinien 4, 5 und 6 aufgeschnitten. Der Verlauf der Schneidlinien 4, 5 und 6 ist in Fig. 1 links strichliert dargestellt, wobei sich die Linie 4 über die gesamte Breite des Schlauchgewebes 1 erstreckt und die Linien 5 und 6 jeweils entlang der Kanten 7 des Schlauchgewebes verlaufen. Die entlang der Schneidlinien 4, 5 und 6 verlaufenen Schnitte werden mittels der Schneidvorrichtung 8 erstellt. Die Schneidvorrichtung 8 umfasst ein innenliegendes, d.h. zwischen den Gewebelagen des Gewebeschlauchs 1 angeordnetes Werkzeug, welches Rollen 9 zum Beabstanden der Gewebelagen und ein den Rollen 9 in Transportrichtung 2 nachgeordnetes plattenförmiges Werkzeug 10 umfasst. Das plattenförmige Werkzeug 10 dient als Gegenstück für die von außen auf das Gewebe einwirkenden Schneidmesser. Die entlang der Schneidlinien 5 und 6 wirkenden Schneidmesser sind mit 11 bezeichnet. Das entlang der Schneidlinie 4 wirkende Schneidmesser ist mit 12 (Fig. 2) bezeichnet. Die Schneidmesser 11 sind aufheizbar und entsprechend dem Doppelpfeil 13 beweglich gelagert, um unter Zwischenschaltung des Gewebes auf das plattenförmige Werkzeug 10 gedrückt zu werden. Dadurch werden in dem Gewebe entlang der Schneidlinien 4, 5 und 6 Schnitte erzeugt. Der entlang der Schneidlinie 4 erzeugte Schnitt ist in einem weiter nach vorne transportierten Abschnitt des Schlauchgewebes mit 14 bezeichnet. Der Schnitt 14 wird hierbei nur in der oberen Gewebelage bzw. der Sackvorderwand 18 (Fig. 2) erzeugt, während die untere Gewebelage bzw. die Sackrückwand 19 hiervon unberührt bleibt. Die entlang der Schneidlinien 5 und 6 erzeugten seitlichen Einschnitte sind in einem weiter nach vorne transportierten Abschnitt des Schlauchgewebes mit 15 und 16 bezeichnet.

An der schematisch mit 17 angedeuteten Position wird das Schlauchgewebe 1 mittels einer nicht dargestellten weiteren Schneideinrichtung abgelängt, um einzelne schlauchförmige Sackkörper 20 zu erhalten. Der Schnitt verläuft hierbei entlang der mit 21 bezeichneten Schneidlinie. Beim Ablängen entlang der Linie 21 fällt der mittels Schraffur gekennzeichnete Gewebeabschnitt 22 weg. Dieser Gewebeabschnitt kann in der Folge wiederverwertet werden, in dem er einem Extruder für die Herstellung von Gewebebändchen zugeführt wird.

Durch das Wegschneiden des Gewebeabschnitts 22 wird nun eine Lasche 23 freigelegt, die aus der Sackrückwand 19 gebildet wird.

In einer alternativen Ausbildung entfällt die Bildung der Lasche 23, sodass die Schnitte 4, 5 und 6 sowie die hierfür erforderlichen Schneidmesser 11 und 12 nicht vorgesehen sind.

Am Ende des Längstransportabschnitts 3 gelangen die schlauchförmigen Sackkörper 20 in einen Quertransportabschnitt 24, in dem sie in Richtung des Pfeils 25 weitertransportiert werden. Die Sackkörper 20 weisen hierbei offene Enden 26 und 27 auf. Im Quertransportabschnitt wird die Lasche 23 (bzw. in der alternativen Ausbildung der entsprechende doppellagige Endabschnitt) der Sackkörper 20 nun entlang der mit 28 angedeuteten Faltlinie nach vorne, d.h. auf die in der Zeichnung sichtbare Oberfläche der oberen Gewebelage bzw. der Sackvorderwand 18, umgeschlagen und mit dieser Oberfläche z.B. durch Kleben verbunden. Es ergibt sich sodann der mit 29 bezeichnete Zustand des Sackkörpers 20.

Zum Verkleben der Lasche 23 bzw. des Endabschnitts der Sackkörper 20 ist eine stationäre Klebstoffaufbringungsdüse 30 vorgesehen, die Klebstoff kontinuierlich auf die Gewebeoberfläche aufbringt. Der Klebstoffaufbringungsdüse 30 ist eine Anpressrolle 31 nachgeordnet, mit der die Lasche 23 bzw. der Endabschnitt nach dem Umschlagen auf die Sackvorderwand 18 angedrückt wird, sodass unter Vermittlung des Klebstoffs eine Verklebung stattfindet.

In der Schnittansicht gemäß Fig. 2 ist die Schneidvorrichtung 8 besser ersichtlich. Die Schneidvorrichtung 8 umfasst zwei Rollen 9, durch welche die beiden Gewebelagen 13 und 14 des Gewebeschlauches 1 voneinander beabstandet werden. Die Schneidvorrichtung 8 umfasst weiters eine in Transportrichtung 2 an die Rollen 9 anschließende Platte 10, welche als Gegenstück zu dem Schweißmesser 12 ausgebildet ist.

In der Ansicht gemäß Fig. 3 ist die Anordnung der Klebstoffaufbringungsdüse 30 und der Anpressrolle 31 oberhalb der Sackkörper 20 ersichtlich. Weiters ist ersichtlich, dass die Sackkörper 20 im Quertransportabschnitt 24 auf einer Platte 32 bzw. einem Tisch aufliegen und auf dieser in Transportrichtung 25 von einer nicht dargestellten Transportvorrichtung fortbewegt werden. Die Platte 32 dient der Anpressrolle 31 hierbei als Gegenstück, um den erforderlichen Anpressdruck aufbringen zu können.

Weiters ist eine Klebstoffabtransportvorrichtung, nämlich ein umlaufendes Band 33 ersichtlich, dessen hinlaufendes Trum zwischen der Platte 32 und den Sackkörpern 20 angeordnet ist. Das Band wird durch geeignete Aussparungen der Platte nach unten geführt und mittels Umlenkrollen 34 umgelenkt. Die Bewegungsrichtung des hinlaufenden Trums des Bandes 33 ist mit 35 bezeichnet und entspricht der Transportrichtung 25 der Sackkörper 20. Die Bewegungsgeschwindigkeit des Bandes 33 ist gleich gewählt wie die Transportgeschwindigkeit der Sackkörper 20. Wie in Fig. 1 ersichtlich ist das Band 33 unterhalb der Klebstoffaufbringungsdüse 30 angeordnet, d.h. in demjenigen Randbereich der Sackkörper 20, in dem die Lasche 20 bzw. der Endabschnitt der Sackkörper 20 umgeschlagen und verklebt wird. Auf diese Weise gelangt der aus der Düse 30 in den Zwischenraum 36 zwischen zwei aufeinanderfolgenden Sackkörpern 20 austretende Klebstoff auf das Band 33 und wird durch dieses abtransportiert. Um den am Band anhaftenden Klebstoff zu entfernen ist eine Abstreifvorrichtung 37 vorgesehen, die mit dem rücklaufenden Trum des Bandes 33 zusammenwirkt.

Anstelle des Bandes 33 kann auch eine Walze angeordnet sein, die unterhalb der Düse 33 angeordnet ist und den im Zwischenraum 36 ausgebrachten Klebstoff wie oben beschrieben aufnimmt.

Für den Fall, dass der im Zwischenraum 36 befindliche Klebstoff an den beiden Sackkörpern 20 hängenbleibt und somit nicht am Band 33 verbleibt und durch dieses abtransportiert wird, bildet es ein den Zwischenraum 36 überbrückendes und die beiden Sackkörper 20 verbindendes dünnes Folienband. Dieses Folienband kann mittels nachgeordneten Messern 38 möglichst nahe an den Sackrändern abgeschnitten und abgeführt werden. Das beschriebene Folienband kann insbesondere bei der Verwendung eines Polymer-, insbesondere Polyolefin- oder Polypropylen-Extrudats als Klebstoff entstehen.

## Patentansprüche

1. Vorrichtung zum Verschließen von Säcken aus Gewebe, der schlauchförmige Sackkörper (20) zuführbar sind, umfassend eine Klebstoffaufbringungsvorrichtung (30) zum kontinuierlichen Aufbringen von Klebstoff in einem Klebebereich und eine Transportvorrichtung zum Transportieren der schlauchförmigen Sackkörper (20) quer zu ihrer Längsachse durch den Klebebereich, sodass auf einen streifenförmigen Bereich der schlauchförmigen Sackkörper (20) Klebstoff aufgebracht werden kann, **dadurch gekennzeichnet, dass** eine von der Transportvorrichtung gesonderte Klebstoffabtransportvorrichtung (33) unterhalb des Klebebereichs angeordnet ist, um den in dem Zwischenraum (36) zwischen den einzelnen schlauchförmigen Sackkörpern (20) von der Klebstoffaufbringungsvorrichtung (30) aufgebrachten Klebstoff abzutransportieren, wobei die Klebstoffaufbringungsvorrichtung (30) ein Extruder ist und unterhalb des Extruders (30) eine stationäre Platte (32) derart angeordnet ist, dass die schlauchförmigen Sackkörper (20) zwischen dem Extruder (30) und der Platte (32) geführt werden, wobei weiters eine Umschlageinrichtung zum Umschlagen einer Lasche (23) bzw. eines Endabschnittes des Gewebes in Transportrichtung (25) nach dem Extruder (30) angeordnet ist und eine Druckrolle dem Extruder (30) nachgeordnet ist und ausgebildet ist, um die Lasche (23) bzw. den Endabschnitt des Sackes nach dem Umschlagen auf eine Sackvorderwand (18) anzudrücken, sodass unter Vermittlung des Klebstoffes eine Verklebung stattfindet, wobei die Klebstoffabtransportvorrichtung (33) ein angetriebenes umlaufendes Band umfasst, das unterhalb einer Transportebene der schlauchförmigen Sackkörper (20) und oberhalb der Platte (32) und unterhalb der Druckrolle angeordnet ist, und wobei vorzugsweise die Platte (32) als Gegenelement für die Druckrolle dient.

2. Vorrichtung nach Anspruch 1, **dadurch gekennzeichnet, dass** die Klebstoffabtransportvorrichtung (33) hitzebeständig ist.

3. Vorrichtung nach Anspruch 1 oder 2, **dadurch gekennzeichnet, dass** die der Klebstoffausbringung zugewandte Seite der Klebstoffabtransportvorrichtung (33) eine antiadhäsive Beschichtung aufweist.

4. Vorrichtung nach Anspruch 1, 2 oder 3, **dadurch gekennzeichnet, dass** eine an die Klebstoffabtransportvorrichtung (33) anstellbare und mit dieser zusammenwirkende Reinigungsvorrichtung (37), bspw. eine Bürste, vorgesehen ist.

5. Vorrichtung nach einem der Ansprüche 1 bis 4, **dadurch gekennzeichnet, dass** die Klebstoffabtransportvorrichtung (33) mithilfe des Antriebes der Transportvorrichtung angetrieben ist.

6. Vorrichtung nach einem der Ansprüche 1 bis 5, **dadurch gekennzeichnet, dass** die Klebstoffaufbringungsvorrichtung (30) stationär angeordnet ist.

7. Verfahren zum Verschließen von Säcken aus Gewebe, bei dem die schlauchförmigen Sackkörper (20) mithilfe einer Transportvorrichtung quer zu ihrer Längsachse transportiert werden, wobei die schlauchförmigen Sackkörper (20) in Transportrichtung (25) voneinander beabstandet sind und das Verschließen ein kontinuierliches Aufbringen eines Klebstoffes in einem Klebebereich umfasst, wobei die schlauchförmigen Sackkörper (20) durch den Klebebereich geführt werden, sodass auf einen streitenförmigen Bereich der schlauchförmigen Sackkörper (20) Klebstoff aufgebracht wird, **dadurch gekennzeichnet, dass** der in dem Zwischenraum (36) zwischen den einzelnen schlauchförmigen Sackkörpern (2C) von der Klebstoffaufbringungsvorrichtung (30) aufgebrachte Klebstoff mittels einer unterhalb des Klebebereiches angeordneten, von der Transportvorrichtung gesonderten Klebstoffabtransportvorrichtung (33) abtransportiert wird, wobei die Klebstoffaufbringungsvorrichtung (30) ein Extruder ist und die schlauchförmigen Sackkörper (20) zwischen dem Extruder (30) und einer stationäre Platte (32) geführt werden, wobei nach der Klebstoffaufbringung eine Lasche (23) bzw. ein Endabschnitt des Gewebes umgeschlagen wird und die Lasche (23) bzw. der Endabschnitt des Sackes nach dem Umschlagen mithilfe einer Druckrolle auf eine Sackvorderwand (18) angedrückt wird, sodass unter Vermittlung des Klebstoffes eine Verklebung stattfindet, wobei der Klebstoff von einem angetriebenen, umlaufenden Band (33) abtransportiert wird, das unterhalb einer Transportebene der schlauchförmigen Sackkörper (20) und oberhalb der Platte (32) und unterhalb der Druckrolle geführt wird, und wobei vorzugsweise die Platte (32) als Gegenelement für die Druckrolle dient.

8. Verfahren nach Anspruch 7, **dadurch gekennzeichnet, dass** die Klebstoffabtransportvorrichtung (33) mithilfe einer Reinigungsvorrichtung (37), bspw. einer Bürste, gereinigt wird.

9. Verfahren nach Anspruch 7 oder 8, **dadurch gekennzeichnet, dass** die Transportvorrichtung und die Klebstoffabtransportvorrichtung (33) gemeinsam angetrieben werden.

10. Verfahren nach einem der Ansprüche 7 bis 9, **dadurch gekennzeichnet, dass** die Klebstoffabtransportvorrichtung (33), insbesondere das Band oder die Rolle in eine Richtung parallel zur Transportrichtung (25) der Transportvorrichtung angetrieben wird.

11. Verfahren nach einem der Ansprüche 7 bis 10, **dadurch gekennzeichnet, dass** sich die Klebstoffabtransportvorrichtung (33), insbesondere das Band oder die Rolle mit der gleichen Geschwindigkeit wie die schlauchförmigen Sackkörper (20) bewegt.

12. Verfahren nach einem der Ansprüche 7 bis 11, **dadurch gekennzeichnet, dass** die schlauchförmigen Sackkorper (20) auf dem Band (33) aufliegen.

13. Verfahren nach einem der Ansprüche 7 bis 12, **dadurch gekennzeichnet, dass** das Gewebe aus monoaxial verstreckten Polymer-, insbesondere Polyolefin- oder Polypropylenbändchen besteht.

14. Verfahren nach einem der Ansprüche 7 bis 13, **dadurch gekennzeichnet, dass** die Außenseiten der schlauchförmigen Sackkörper (20) beschichtet sind.

## Claims

1. A device for closing bags of woven fabric, to which tubular bag bodies (20) can be fed, comprising an adhesive application device (30) for continuously applying an adhesive in an adhesive region, and a transport device for transporting the tubular bag bodies (20) transversely to their longitudinal axes through the adhesive region so as to enable the application of adhesive to a strip-like area of the tubular bag bodies (20), **characterized in that** an adhesive removal device (33) separate from the transport device is disposed below the adhesive region to remove the adhesive applied in the interspace (36) between the individual tubular bag bodies (20) by the adhesive application device (30), wherein the adhesive application device (30) is comprised of an extruder, and a stationary plate (32) is disposed below the extruder (30) in such a manner that the tubular bag bodies (20) are guided between the extruder (30) and the plate (32), wherein, furthermore, a turn-over device is disposed downstream of the extruder (30), viewed in the transport direction (25), for turning a flap (23) or an end portion of the woven fabric, respectively, and a pressure roller is disposed downstream of the extruder (30) and configured to press the flap (23) or the end portion of the bag, respectively, against a bag front wall (18) after turning so as to provide an adhesive connection via the interposed adhesive, wherein the adhesive removal device (33) comprises a driven, recirculating belt disposed below a transport plane of the tubular bag bodies (20) and above the plate (32) and below the pressure roller, and wherein the plate (32) preferably serves as a counter element for the pressure roller.

2. A device according to claim 1, **characterized in that** the adhesive removal device (33) is heat-resistant.

3. A device according to claim 1 or 2, **characterized in that** the side of the adhesive removal device (33) facing the adhesive application comprises an antiadhesive coating.

4. A device according to claim 1, 2 or 3, **characterized in that** a cleaning device (37), for instance a brush, is provided, said cleaning device being positionable at the adhesive removal device (33) and cooperating therewith.

5. A device according to any one of claims 1 to 4, **characterised in that** the adhesive removal device (33) is driven by the drive of the transport device.

6. A device according to any one of claims 1 to 5, **characterized in that** the adhesive application device (30) is stationarily mounted.

7. A method for closing bags of woven fabric, in which tubular bag bodies (20) are transported transversely to their longitudinal axes by a transport device, wherein the tubular bag bodies (20) are disposed in a mutually spaced-apart relationship in the transport direction (25), and said closing comprises continuously applying an adhesive in an adhesive region, wherein the tubular bag bodies (20) are guided through the adhesive region such that adhesive is applied to a strip-like area of the tubular bag bodies (20), **characterized in that** the adhesive applied in the interspace (36) between the individual tubular bag bodies (20) by the adhesive application device (30) is removed by an adhesive removal device (33) separate from the transport device and disposed below the adhesive region, wherein the adhesive application device (30) is comprised of an extruder, and the tubular bag bodies (20) are guided between the extruder (30) and a stationary plate (32), wherein, following the adhesive application, a flap (23) or an end portion of the woven fabric is turned over, respectively, and the flap (23) or the end portion of the bag is pressed against a bag front wall (18) by a pressure roller after turning so as to provide an adhesive connection via the interposed adhesive, wherein the adhesive is removed by a driven, recirculating belt (33) guided below a transport plane of the tubular bag bodies (20) and above the plate (32) and below the pressure roller, and wherein the plate (32) preferably serves as a counter element for the pressure roller.

8. A method according to claim 7, **characterized in that** the adhesive removal device (33) is cleaned by means of a cleaning device (37), for instance a brush.

9. A method according to claim 7 or 8, **characterized in that** the transport device and the adhesive removal device (33) are driven jointly.

10. A method according to any one of claims 7 to 9, **characterized in that** the adhesive removal device (33), in particular the belt or the roller, is driven in a direction parallel with the transport direction (25) of the transport device.

11. A method according to any one of claims 7 to 10, **characterized in that** the adhesive removal device (33), in particular the belt or the roller, moves at the same speed as the tubular bag bodies (20).

12. A method according to any one of claims 7 to 11, **characterized in that** the tubular bag bodies (20) are supported on the belt (33).

13. A method according to any one of claims 7 to 12, **characterized in that** the woven fabric is comprised of monoaxially stretched polymer, in particular polyolefin or polypropylene, ribbons.

14. A method according to any one of claims 7 to 13, **characterized in that** the outer sides of the tubular bag bodies (20) are coated.

## Revendications

1. Dispositif de fermeture de sacs en tissu, vers lequel des corps de sacs tubulaires (20) peuvent être amenés, comprenant un dispositif d'application d'adhésif (30) pour l'application continue d'adhésif dans une zone de collage et un dispositif de transport pour le transport des corps de sacs tubulaires (20) transversalement à leur axe longitudinal à travers la zone de collage, si bien que de l'adhésif peut être appliqué sur une zone en forme de bande des corps de sacs tubulaires (20), **caractérisé en ce qu'**un dispositif d'évacuation d'adhésif (33) séparé du dispositif de transport est agencé sous la zone de collage, afin d'évacuer l'adhésif appliqué par le dispositif d'application d'adhésif (30) dans l'espace intermédiaire (36) entre les corps de sacs tubulaires individuels (20), dans lequel le dispositif d'application d'adhésif (30) est une extrudeuse et une plaque stationnaire (32) est agencée sous l'extrudeuse (30) de sorte que les corps de sacs tubulaires (20) sont guidés entre l'extrudeuse (30) et la plaque (32), dans lequel en outre un dispositif de retournement pour le retournement d'une languette (23) ou d'une section d'extrémité du tissu est agencé en aval de l'extrudeuse (30) dans le sens de transport (25) et un rouleau presseur est agencé en aval de l'extrudeuse (30) et est réalisé pour appliquer la languette (23) ou la section d'extrémité du sac après le retournement sur une paroi avant de sac (18), si bien qu'un collage a lieu par l'intermédiaire de l'adhésif, dans lequel le dispositif d'évacuation d'adhésif (33) comprend une bande rotative entraînée, qui est agencée sous un plan de transport des corps de sacs tubulaires (20) et au-dessus de la plaque (32) et sous le rouleau presseur, et dans lequel de préférence la plaque (32) sert de contre-élément pour le rouleau presseur.

2. Dispositif selon la revendication 1, **caractérisé en ce que** le dispositif d'évacuation d'adhésif (33) est résistant à la chaleur.

3. Dispositif selon la revendication 1 ou 2, **caractérisé en ce que** le côté du dispositif d'évacuation d'adhésif (33) tourné vers la distribution d'adhésif présente un revêtement antiadhésif.

4. Dispositif selon la revendication 1, 2 ou 3, **caractérisé en ce qu'**un dispositif de nettoyage (37) pouvant être placé contre le dispositif d'évacuation d'adhésif (33) et coopérant avec celui-ci, par exemple une brosse, est prévu.

5. Dispositif selon l'une quelconque des revendications 1 à 4, **caractérisé en ce que** le dispositif d'évacuation d'adhésif (33) est entraîné à l'aide de l'entraînement du dispositif de transport.

6. Dispositif selon l'une quelconque des revendications 1 à 5, **caractérisé en ce que** le dispositif d'application d'adhésif (30) est agencé de manière stationnaire.

7. Procédé de fermeture de sacs en tissu, dans lequel les corps de sacs tubulaires (20) sont transportés à l'aide d'un dispositif de transport transversalement à leur axe longitudinal, dans lequel les corps de sacs tubulaires (20) sont espacés les uns des autres dans le sens de transport (25) et la fermeture comprend une application continue d'un adhésif dans une zone de collage, dans lequel les corps de sacs tubulaires (20) sont guidés à travers la zone de collage, si bien que de l'adhésif est appliqué sur une zone en forme de bande des corps de sacs tubulaires (20), **caractérisé en ce que** l'adhésif appliqué par le dispositif d'application d'adhésif (30) dans l'espace intermédiaire (36) entre les corps de sacs tubulaires individuels (20) est évacué au moyen d'un dispositif d'évacuation d'adhésif (33) séparé du dispositif de transport, agencé sous la zone de collage, dans lequel le dispositif d'application d'adhésif (30) est une extrudeuse et les corps de sacs tubulaires (20) sont guidés entre l'extrudeuse (30) et une plaque stationnaire (32), dans lequel après l'application d'adhésif, une languette (23) ou une section d'extrémité du tissu est retournée et la languette (23) ou la section d'extrémité du sac est appliquée après le retournement sur une paroi avant de sac (18) à l'aide d'un rouleau presseur, si bien qu'un collage a lieu par l'intermédiaire de l'adhésif, dans lequel l'adhésif est évacué par une bande rotative entraînée (33), qui est guidée sous un plan de transport des corps de sacs tubulaires (20) et au-dessus de la plaque (32) et sous le rouleau presseur, et dans lequel de préférence la plaque (32) sert de contre-élément pour le rouleau presseur.

8. Procédé selon la revendication 7, **caractérisé en ce que** le dispositif d'évacuation d'adhésif (33) est nettoyé à l'aide d'un dispositif de nettoyage (37), par exemple une brosse.

9. Procédé selon la revendication 7 ou 8, **caractérisé en ce que** le dispositif de transport et le dispositif d'évacuation d'adhésif (33) sont entraînés ensemble.

10. Procédé selon l'une quelconque des revendications 7 à 9, **caractérisé en ce que** le dispositif d'évacuation d'adhésif (33), en particulier la bande ou le rouleau est entraîné dans une direction parallèle au sens de transport (25) du dispositif de transport.

11. Procédé selon l'une quelconque des revendications 7 à 10, **caractérisé en ce que** le dispositif d'évacuation d'adhésif (33), en particulier la bande ou le rouleau se déplace à la même vitesse que les corps de sacs tubulaires (20).

12. Procédé selon l'une quelconque des revendications 7 à 11, **caractérisé en ce que** les corps de sacs tubulaires (20) reposent sur la bande (33).

13. Procédé selon l'une quelconque des revendications 7 à 12, **caractérisé en ce que** le tissu est en bandelettes de polymère étirées monoaxialement, en particulier de polyoléfine ou de polypropylène.

14. Procédé selon l'une quelconque des revendications 7 à 13, **caractérisé en ce que** les côtés extérieurs des corps de sacs tubulaires (20) sont revêtus.
